# EUROPÄISCHE PATENTSCHRIFT

(11) **EP 1 203 533 B1**
(45) Veröffentlichungstag und Bekanntmachung des Hinweises auf die Patenterteilung: **10.05.2006**
(21) Anmeldenummer: 00811031.4
(22) Anmeldetag: 03.11.2000
(51) Int. Cl.: A21C 3/02

(54) **Vorrichtung und Verfahren zum Walzen eines Teigbandes**
Apparatus and process for rolling a dough sheet
Dispositif et procédé pour rouler une bande de pâte

(43) Veröffentlichungstag der Anmeldung: 08.05.2002
(73) Patentinhaber: SEEWER AG, CH-3400 Burgdorf (CH)
(72) Erfinder: Zwahlen, Andreas, 3415 Hasle-Rüegsau (CH)
(74) Vertreter: Roshardt, Werner Alfred

(56) Entgegenhaltungen:
- EP-A- 0 179 645
- EP-A- 0 545 725
- EP-A- 0 657 101
- WO-A-91/01643
- WO-A-95/28087
- DE-A- 2 445 918
- GB-A- 1 166 454

## Beschreibung

### Technisches Gebiet

Die Erfindung betrifft eine Vorrichtung zum Walzen eines Teigbandes, umfassend eine Transportvorrichtung zum Zuführen des Teigbandes, eine Walzenanordnung zum Reduzieren einer Dicke des Teigbandes und Mittel zum Variieren einer gegenseitigen Lage der Walzenanordnung und der Transportvorrichtung in zumindest zwei verschiedenen Raumrichtungen. Weiter betrifft die Erfindung ein Verfahren zum Walzen eines Teigbandes.

### Stand der Technik

Viele Lebensmittel werden heute industriell verarbeitet. Hierzu gehören auch Lebensmittel, welche vollständig oder zumindest teilweise aus Teig hergestellt sind. Es gibt unzählige Teigarten und jede Teigart weist ihre spezifischen Eigenschaften auf, welche bei der Verarbeitung des Teiges berücksichtigt werden müssen. Dieses Problem zeigt sich beispielsweise bei der Herstellung von kontinuierlichen Teigbändern, welche für die industrielle Produktion vieler Lebensmittel benötigt werden. Der Teig muss, bevor er in seine endgültige Form gebracht wird, auf eine bestimmte Dicke reduziert werden. Für diesen Vorgang ist es beispielsweise entscheidend, wie weich bzw. wie zäh oder wie flüssig bzw. wie fest der Teig ist oder wieviel Luft er enthält. Weiche Teige sollten beispielsweise schneller heruntergewalzt werden als zähere Teige. Zudem kann festgehalten werden, dass es für das Endprodukt um so besser ist, je weniger mit der ursprünglichen Teigmasse bei der Verarbeitung geschieht, d.h. je weniger Verformungsschritte bis zur gewünschten Teigdicke notwendig sind. Entsprechend werden hohe Anforderungen an die jeweiligen Verarbeitungsmaschinen gestellt.

Aus der CH 582 480 ist eine Maschine zum Strecken von Teig bekannt. Der Teig wird mittels mehreren Förderbändern unter einer Anordnung von Walzen hindurchgeführt, wobei die Walzen auf einer Umlaufbahn in Förderrichtung über die Förderbänder geführt werden. Die Walzen rotieren hierbei um ihre Rotationsachse im zur Umlaufbahn entgegengesetzten Sinn. Da der Abstand von den Walzen zu den Förderbändern in Förderrichtung immer kleiner wird, wird der zugeführte Teig in mehreren Stufen auf die gewünschte Dicke reduziert. Diese Mehrzahl von Verarbeitungsschritten widerspricht jedoch bei bestimmten Teigarten dem Grundsatz einer möglichst stressfreien Teigverarbeitung, d.h. einer möglichst kurzen, auf die Teigart abgestimmten Eingriffsstrecke. Zudem ist es nicht möglich, ausser der Teigdicke und der Fördergeschwindigkeit, die Art der Verarbeitung an die Eigenschaften des zu verarbeitenden Teiges anzupassen.

Aus der EP 0 953 287 A2 ist eine weitere Vorrichtung zum Strecken von Teig oder anderen, hochelastischen Materialien bekannt. Auch hier wird der Teig über mehrere Förderbänder und Walzen an einer Mehrzahl von Rollen vorbeigeführt, wobei die Rollen bzw. deren Rotationsachsen auf dem Umfang eines Rades befestigt sind. Durch eine Drehung des Rades in Förderrichtung beschreiben die Rollen eine Kreisbahn. Die Förderbänder bzw. Walzen, auf welchen der Teig unter dieser Kreisbahn hindurchgeführt werden, sind in kleine Abschnitte unterteilt, wobei sich der Abstand der Bahnabschnitte zur Kreisbahn in Förderrichtung auf das gewünschte Mass verringert. Zur Veränderung der Kompressionsrate kann das Rollenrad zwar in Förderrichtung leicht verschoben werden, allerdings wird die Eingriffsstrecke hierdurch nur minimal verändert und mit dem Verschieben des Rollenrades wird auch die resultierende Dicke des Teigbandes verändert. Diese Dicke muss daher in einem zusätzlichen Schritt nach dem Herunterwalzen des Teiges mit einer zusätzlichen, plattenförmigen Vorrichtung korrigiert werden. Durch diese Vielzahl von Förderbändern, Walzen und Platten ergibt sich eine sehr lange Eingriffsstrecke, die nur minimal verändert werden kann.

Für die Teigverarbeitung mit aus dem oben genannten Stand der Technik bekannten Maschinen sind bei Teigarten mit stark unterschiedlichen Eigenschaften mehrere verschiedene Maschinen notwendig.

Es sind aber auch schon Vorrichtungen bekannt (vgl. z. B. EP 0 179 645 A2, Rheon I; WO 91 01643 A1, Quinlan; EP 0 657 101 A1, Rheon III), bei welchen die zur Transportvorrichtung gehörenden, unteren Walzen einerseits und die zur Walzanordnung gehörenden oberen Walzen andererseits relativ zueinander in zwei verschiedenen Raumrichtungen verschiebbar sind.

Im Einzelnen offenbart die EP 0 179 645 A2 eine Teigwalzmaschine, bei der die Teigmasse auf einem Zuführ-Förderband zu einem Rollenkorb geführt, in der Dicke reduziert und auf einem Abführ-Förderband wegbefördert wird. Die Dickenreduktion erfolgt in drei Stufen: zuerst zwischen dem Rollenkorb und dem Zuführ-Förderband, danach zwischen dem Rollenkorb und einer Gegenwalze, die sich zwischen den beiden Förderbändern befindet und schliesslich zwischen dem Rollenkorb und dem Abführ-Förderband. Die Dicke des resultierenden Teigbandes wird ausschliesslich durch den Abstand des Rollenkorbes zum Abführ-Förderband bestimmt. Dieser Abstand kann eingestellt werden, indem der Rollenkorb horizontal, d. h. in Richtung der Förderbänder, verschoben wird. Damit die Dickenreduktion in nicht zu grossen Sprüngen erfolgt, kann zusätzlich der Abstand der Gegenwalze zum Rollenkorb verändert werden, indem diese vertikal verschoben wird.

Allerdings sind auch diese Maschinen hinsichtlich Flexibilität und Einfachheit der Konstruktion nicht vollauf befriedigend.

### Darstellung der Erfindung

Aufgabe der Erfindung ist es, eine Vorrichtung der eingangs erwähnten Art anzugeben, welche die beim Stand der Technik vorhandenen Probleme vermeidet und insbesondere eine einfache und kostengünstige Möglichkeit zur Verarbeitung vieler verschiedener Teigarten bietet.

Die Lösung der Aufgabe ist durch die Merkmale des Anspruchs 1 definiert. Die erfindungsgemässe Vorrichtung zum Walzen eines Teigbandes, umfasst eine Transportvorrichtung sowie eine Walzenanordnung. Das Teigband wird von der Transportvorrichtung der Walzenanordnung zu- und zur Reduktion der Dicke des Teigbandes durch diese hindurchgeführt. Mit entsprechenden Mitteln kann nun die gegenseitige Lage der Walzenanordnung und der Transportvorrichtung in zumindest zwei verschiedenen Raumrichtungen variiert werden. Die genannten Mittel zum Variieren einer gegenseitigen Lage sind so ausgebildet, dass bei gleichbleibender Dicke des Teigbandes der Teigeingriffsbereich entsprechend den Eigenschaften des Teigbandes einstellbar ist.

Durch die praktisch beliebige Wahl der gegenseitigen Lage von Walzenanordnung und Transportvorrichtung kann die Vorrichtung zum Walzen eines Teigbandes entsprechend den Eigenschaften verschiedenster Teigarten eingestellt werden. Dies ermöglicht es, die Vorrichtung zur Verarbeitung einer Vielzahl von Teigarten mit den unterschiedlichsten Eigenschaften zu verwenden.

Die Walzenanordnung umfasst vorzugsweise eine Rollenanordnung und zur Reduktion der Dicke des Teigbandes genau eine Gegenwalze, wobei sich die Gegenwalze auf der der Rollenanordnung gegenüberliegenden Seite des Teigbandes befindet.

Die Dicke des Teigbandes wird zwischen der Rollenanordnung und der Gegenwalze in einem Teigeingriffsbereich auf das eingestellte Mass reduziert. Der Teigeingriffsbereich ist hierbei definiert als derjenige Bereich des Teigbandes, auf welchen neben der Schwerkraft und der durch die Transportvorrichtung erzeugten Gegenkraft eine durch die Walzenanordnung erzeugte Druckkraft auf das Teigband einwirkt. Wie bereits erwähnt, sollte dieser Bereich möglichst variabel gehalten werden.

Indem nun bei gleichbleibendem Abstand von der Rollenanordnung zur Gegenwalze die gegenseitige Lage der Walzenanordnung und der Transportvorrichtung mit den erwähnten Mitteln variiert wird, kann bei gleichbleibender Dicke des Teigbandes der Teigeingriffsbereich entsprechend den Eigenschaften des Teigbandes eingestellt werden.

Auf diese Weise kann der Teigeingriffsbereich über einen relativ grossen Bereich variiert und damit optimal für jede Teigart eingestellt werden. Der Teigeingriffsbereich kann beispielsweise um bis zu eine Grössenordnung variiert werden. Er kann insbesondere für jede Teigart auf ein Minimum reduziert werden. Dabei ändert sich durch die Variierung des Teigeingriffsbereiches die Dicke des Teigbandes nicht. D.h. ist die gewünschte Dicke des Teigbandes einmal eingestellt, ändert sich diese durch das Verändern des Teigeingriffsbereiches nicht mehr. Das Nachführen der Dicke entfällt.

Die Minimierung des Teigeingriffsbereiches wird nicht nur durch den grossen Einstell-bereich, sondern auch durch die Verwendung einer einzigen Gegenwalze zur Reduktion der Teigdicke erreicht. Die erfindungsgemässe Vorrichtung ermöglicht somit eine möglichst stressfreie Verarbeitung der unterschiedlichsten Teigarten.

Das Teigband wird der Walzenanordnung von der Transportvorrichtung entlang einer vorgegebenen Transportbahn zugeführt. Hierzu weist die Transportvorrichtung vorzugsweise ein Förderband auf, dessen Oberfläche im Transportbereich in einer annähernd horizontalen Ebene liegt. Selbstverständlich gibt es eine Vielzahl von Möglichkeiten, wie der zu verarbeitende Teig zur Walzenanordnung transportiert werden kann. Anstatt eines Förderbandes könnte beispielsweise eine Vielzahl von kleineren Rollen verwendet werden. Oder der Teig wird nicht in einer mehr oder weniger horizontalen Ebene, sondern auf einer beliebig geneigten oder gekrümmten Transportbahn oder anderen bekannten Fördereinrichtungen zur Walzenanordnung geführt.

Die Walzenanordnung umfasst, wie bereits erwähnt, eine Rollenanordnung, welche sich auf einer Seite des Teigbandes befindet und eine Gegenwalze, welche sich auf der gegenüberliegenden Seite des zu verarbeitenden Teigbandes befindet. Die Rollenanordnung befindet sich typischerweis oberhalb und die Gegenwalze unterhalb des Teigbandes.

Bei einer bevorzugten Ausführungsform der Erfindung umfasst die Rollenanordnung zumindest eine, in der Regel jedoch eine Mehrzahl von Satellitenrollen, welche auf einer definierten Umlaufbahn in einem vorgegebenen, minimalen Abstand an der Gegenwalze vorbeigeführt werden. In dem Moment, in dem der Abstand einer Satellitenrolle zur Gegenwalze minimal ist, wird durch die Rotationsachse der Gegenwalze und die Rotationsachse dieser Satellitenrolle, welche parallel zueinander liegen, eine Ebene aufgespannt. Der Teigeingriffsbereich kann nun unter Beibehaltung des vorgegebenen Abstandes durch Variieren des Winkels zwischen dieser Ebene und der Transportbahn auf das gewünschte Mass eingestellt werden. Hierfür kann entweder die Transportbahn selber geneigt bzw. deren Verlauf im Bereich der Gegenwalze modifiziert oder aber die Lage der Walzenanordnung verändert werden. Selbstverständlich ist auch eine Kombination beider Varianten möglich.

Bei einer weiteren vorteilhaften Ausführungsform der Erfindung kann neben dem Teigeingriffsbereich auch die resultierende Dicke des Teigbandes variiert werden. Dies erfolgt auf einfache Art und Weise, indem der Abstand von der Umlaufbahn der Satellitenrollen zur Gegenwalze auf das gewünschte Mass eingestellt wird.

Die gegenseitige Lage der Walzenanordnung und der Transportvorrichtung, wie auch die Dicke des Teigbandes, d.h. der minimale Abstand von der Umlaufbahn der Satellitenrollen zur Gegenwalze, können prinzipiell auf beliebige Art und Weise, beispielsweise mit je einer Art Kreuzschlitten oder mit geeignet konstruierten Hebelmechanismen, eingestellt werden.

Vorzugsweise werden hierzu jedoch eine erste Schwenkvorrichtung für die Veränderung der gegenseitigen Lage von Walzenanordnung und Transportvorrichtung und eine zweite Schwenkvorrichtung zum Einstellen der Teigdicke verwendet. Die Schwenkvorrichtungen können beispielsweise in der Art eines Exzenters oder in der Art eines Kurbeltriebes realisiert werden. Dies hat den Vorteil, dass durch geeignete Wahl der Exzentrizitäten bzw. der Kurbelradien und der wirkenden Hebellängen eine minimale bzw. eine maximale Änderung der gegenseitigen Lage von Walzenanordung und Transportvorrichtung bzw. minimale und maximale Dicken für das resultierende Teigband vorgegeben werden können.

Um den konstruktiven Aufwand möglichst gering zu halten und um die beiden Schwenkvorrichtungen, d.h. den Teigeingriffsbereich und die Teigband-Dicke, unabhängig voneinander einstellen zu können, sind die beiden Schwenkvorrichtungen miteinander gekoppelt.

Die erste Schwenkvorrichtung ist beispielsweise als eine Art Kurbeltrieb realisiert. Sie weist auf beiden Seiten der Walzenanordnung eine Koppelstange, eine Kurbelscheibe sowie eine Grundplatte auf. Die Grundplatten sind um die Rotationsachse der Gegenwalze drehbar gelagert und zwischen den Grundplatten ist die Walzenanordnung um eine Drehachse drehbar fixiert. Das eine Ende der Koppelstangen ist jeweils exzentrisch aber beweglich mit der Kurbelscheibe und das andere Ende der Koppelstangen jeweils beweglich mit der Grundplatte verbunden. Durch Drehung der Kurbelscheibe beschreibt die Grundplatte, angetrieben durch die Koppelstangen eine zyklische, kreissektorförmige Drehbewegung um die Rotationsachse der Gegenwalze. Die Länge der Drehbewegung hängt vom Kurbelradius und der Länge bzw. der Befestigungspunkte der Koppelstangen ab.

Die zweite Schwenkvorrichtung ist beispielsweise ebenfalls als eine Art Kurbeltrieb, mit welchem sich der Abstand zwischen der Rollenanordnung und der Gegenwalze verändern lässt, realisiert. Die Kopplung mit der ersten Schwenkvorrichtung erfolgt beispielsweise, indem die zweite Schwenkvorrichtung auf der bzw. den Grundplatten montiert wird. Auf diese Weise dreht sie bei einer Betätigung der ersten Schwenkvorrichtung mit den Grundplatten mit. Bei einer Drehung ihrer Drehscheibe versetzt sie die Rollenanordnung in eine Hin- und Herbewegung, welche in diesem Fall im Wesentlichen radial zur Rotationsachse der Gegenwalze hin- bzw. von dieser weg führt.

Auf diese Weise lässt sich mit der ersten Schwenkvorrichtung die Winkellage der Walzenanordnung zur Transportvorrichtung und mit der zweiten Schwenkvorrichtung unabhängig von dieser Winkellage der Abstand zwischen der Rollenanordnung und der Gegenwalze verändern.

Die Satellitenrollen der Rollenanordnung sind bevorzugt rotationssymmetrisch um jeweils eine Symmetrieachse, welche parallel zur Rotationsachse der Gegenwalze liegt. D.h. eine Satellitenrolle ist einerseits frei um ihre Symmetrieachse drehbar und andererseits ist sie in der Rollenanordnung fixiert und beschreibt bei einer Drehung der Rollenanordnung eine definierte Umlaufbahn, welche wie bereits erwähnt, in einem bestimmten Abstand an der Gegenwalze vorbeiführt.

Die Satellitenrollen können nun entweder frei oder angetrieben drehbar sein. Wenn sie frei drehbar sind werden sie, wenn sie im Bereich der Gegenwalze am Teig vorbeigeführt werden, beispielsweise durch Reibung mit der Teigoberfläche in eine Eigenrotation um ihre Symmetrieachse versetzt. Oder die Satellitenrollen weisen eine Art Lauffläche auf, welche im Bereich der Gegenwalze durch Reibungskontakt mit einer entsprechend geformten Schiene die Satellitenrolle in Rotation versetzt. Ebenso ist ein Antrieb durch einen ortsfesten oder selber angetriebenen Riemen, beispielsweise einen Flachriemen, möglich.

Zum Antreiben der Satellitenrollen kommen jedoch nicht nur schlupfbehaftete, sondern auch schlupffreie Antriebe in Frage. Vorzugsweise verfügt nämlich jede Satellitenrolle über ein Ritzel, das beim Vorbeiführen der Satellitenrolle am Teig von einem Zahnriemen in eine vordefinierte Eigenrotation versetzt wird. Der Zahnriemen ist derart positioniert, dass er die Satellitenrolle auf einer vorgegebenen Strecke vor und nach der Gegenwalze antreibt.

Der Zahnriemen selber ist beispielsweise ortsfest gegenüber der Rollenanordnung fixiert, wobei das eine Ende des Zahnriemens über eine Feder befestigt ist, damit eine durch die Schwenkvorrichtungen bedingte Bewegung der Rollenanordnung ausgeglichen werden kann. Oder der Zahnriemen ist selber angetrieben, d.h. er wird mit einer bestimmten Geschwindigkeit an den in der Rollenanordnung rotierenden Satellitenrollen vorbeigeführt. Auch hier kann eine gefederte Lagerung des Zahnriemens von Vorteil sein.

Damit nun auf möglichst einfache Art und Weise verschiedenste Teigarten verarbeitet werden können, verfügt die Walzvorrichtung vorzugsweise über einen Speicher zur Speicherung einer Mehrzahl von Datensätzen, aus welchen sich zu einer bestimmten Teigart die gegenseitige Lage von Walzenanordnung und Transportvorrichtung sowie der Abstand von Rollenanordnung und Gegenwalze bestimmen lassen. Ein solcher Datensatz umfasst beispielsweise eine Teigart und die dieser Teigart entsprechenden Einstellungen der beiden Schwenkvorrichtungen.

Weiter sind bevorzugt Mittel zur Auswahl der zu verarbeitenden Teigart, Mittel zum Auslesen der zugehörigen Parameter aus dem Speicher sowie Mittel zur Bestimmung und automatischen Einstellung der zur ausgewählten Teigart gehörigen Lage von Walzenanordnung und Transportvorrichtung, d.h. der Teigeingriffsstrecke bzw. des Abstandes zwischen der Umlaufbahn der Satellitenrollen und der Gegenwalze, d.h. der Teigdicke, vorgesehen.

Die Vorrichtung verfügt beispielsweise über eine Steuerung, welche eine Bedientastatur, einen Bildschirm, einen elektronischen Speicher und einen Mikroprozessor umfasst. Via Tastatur lassen sich beispielsweise die aktuellen Einstellungen der Vorrichtung als Datensatz abspeichern oder es lassen sich von Hand Datensätze eingeben. Über vorbelegte Tasten oder Knöpfe oder via Auswahl aus einem Menü lässt sich dann die zu verarbeitende Teigart auswählen und der Mikroprozessor liefert dann die Einstellungen für Winkellage bzw. Teigdicke, welche automatisch oder manuell an der Vorrichtung eingestellt werden.

Eine mögliche Art der Realisierung einer derartigen Steuerung ist beispielsweise eine sogenannten SPS, eine Speicher-programmierte Steuerung, welche ein Operationspanel zur Bedienung aufweist. Denkbar ist auch ein entsprechend an die Walzvorrichtung angeschlossener Computer mit Ein- und Ausgabegeräten.

Es ist möglich, die Teigeingriffsstrecke in Abhängigkeit der Teigeigenschaften während des Walzvorganges zu regulieren.

Bei einer weiteren bevorzugten Ausführungsform der Erfindung ist die Transportvorrichtung mit Mitteln zum Einstellen der Breite sowie Mitteln zur seitlichen Führung des der Walzenanordnung zugeführten Teigbandes vorgesehen. Hierzu eignen sich beispielsweise entsprechend geformte seitliche Führungsplatten, welche den Teig auf die erforderliche Breite zusammendrücken. Teig ist im Allgemeinen jedoch eine zähflüssige, eher haftende Masse, welche durch stationäre Führungsplatten lediglich verschmiert, jedoch nicht auf eine definierte Breite gebracht werden kann. Besser geeignet sind daher bewegliche Führungsplatten, welche den Teig seitlich mit einer vorgegebenen Schlagzahl in der Grössenordnung von etwa einem Schlag pro Sekunde auf die gewünschte Breite zurechtformt.

Als ebenfalls vorteilhaft haben sich Mittel zum Bestimmen der Dicke des zugeführten Teigbandes sowie Mittel zum Variieren der Transportgeschwindigkeit in Abhängigkeit der gemessenen Dicke des Teigbandes erwiesen. Die Transportvorrichtung weist beispielsweise eine leichte Walze, eine sogenannte Tänzerwale auf, welche an einem Hebelarm locker auf dem der Walzenanordnung zugeführten Teigband abläuft. Bei unterschiedlichen Teigbanddicken beschreibt die Tänzerwalze eine Auf- und Abbewegung, welche von einem Sensor erfasst und an eine Steuervorrichtung weitergegeben wird. Diese Steuervorrichtung steuert in Abhängigkeit der erfassten Auf- und Abbewegung der Tänzerwalze die Teigvorschubgeschwindigkeit, indem sie entsprechende Steuersignale an den Antriebsmotor der Transportvorrichtung weiterleitet.

Um den Abstand der seitlichen Führungsplatten sowie der Tänzerwalze von der Walzenanordnung konstant zu halten, können diese beispielsweise über geeignete Mittel mit der Walzenanordnung verbunden werden. Für den Fall, dass der Rollenkorb um die Rotationsachse der Gegenwalze verschwenkt wird, sind die Führungsplatten und die Tänzerwalze beispielsweise über eine Verbindungsstange mit der Rollenanordnung verbunden und werden entsprechend mitgezogen bzw. mitgestossen, damit der Abstand zur Rollenanordnung in etwa gleich bleibt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Teigwalz-Maschine mit einer Walzenanordnung und einer Transportvorrichtung;
- Fig. 2: die Teigwalz-Maschine aus Fig. 1 mit geänderter Stellung der Walzenanordnung für einen längeren Teigeingriffsbereich;
- Fig. 3: die Teigwalz-Maschine aus Fig. 1 mit geänderter Stellung der Walzenanordnung für ein dickeres Teigband;
- Fig. 4: eine Schwenkvorrichtung zur Einstellung des Teigeingriffsbereiches und der Teigbanddicke;
- Fig. 5: die Schwenkvorrichtung aus Fig. 4 in einer anderen Position;
- Fig. 6: ein orstfester Zahnriemen für den Antrieb der Satellitenrollen;
- Fig. 7: eine von einem Zahnriemen aus Fig. 6 angetriebene Satellitenrolle mit Ritzel;
- Fig. 8: ein angetriebener Zahnriemen für den Antrieb der Satellitenrollen;
- Fig. 9: eine von einem Zahnriemen aus Fig. 8 angetriebene Satellitenrolle mit Ritzel;
- Fig. 10: eine Teigwalz-Maschine mit Tänzerwalze und seitlicher Führung des Teigbandes;
- Fig. 11: eine Ansicht der Teigwalz-Maschine aus Fig. 9 von oben;
- Fig. 12: eine alternative Ausführung der Walzenanordnung;
- Fig. 13: eine weitere, alternative Ausführung der Walzenanordnung;
- Fig. 14: die Teigwalz-Maschine aus Fig. 1 mit geänderter Stellung der Transportvorrichtung für einen längeren Teigeingriffsbereich sowie
- Fig. 15: die Teigwalz-Maschine aus Fig. 1 mit geänderter Stellung der Transportvorrichtung und der Gegenwalze für einen längeren Teigeingriffsbereich.

Grundsätzlich sind in den Figuren gleiche Teile mit gleichen Bezugszeichen versehen.

### Wege zur Ausführung der Erfindung

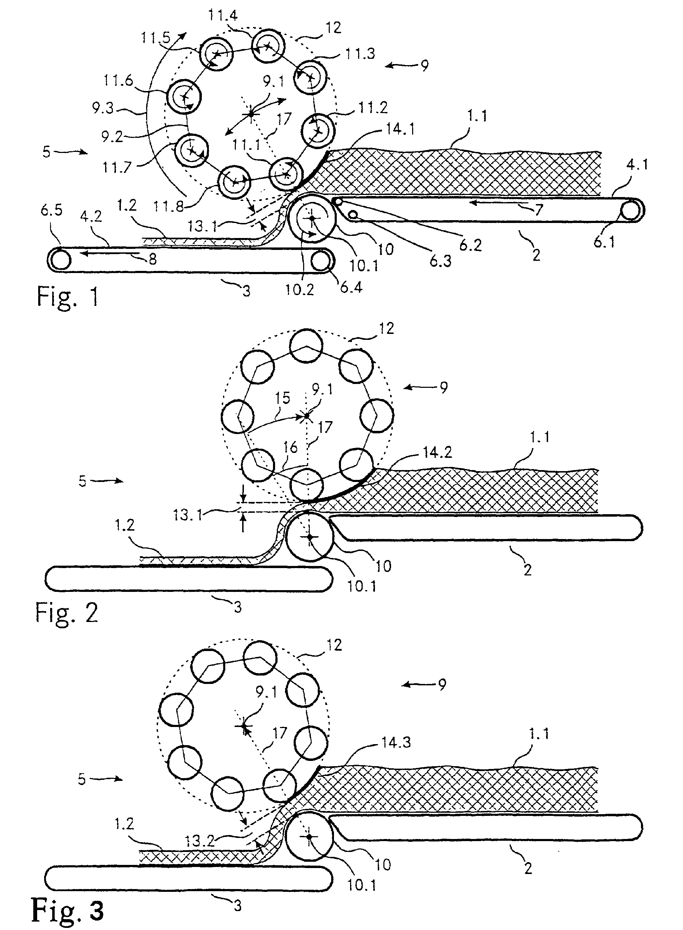

Anhand der Figuren 1 bis 12 soll die Erfindung und einige der bevorzugten Ausführungsformen näher erläutert werden.

Figur 1 zeigt eine erfindungsgemässe Teigwalz-Maschine zum Walzen eines Teigbandes. Das Teigband weist einen ungewalzten Bandabschnitt 1.1 und einem gewalzten Bandabschnitt 1.2 auf. Der ungewalzte Bandabschnitt 1.1 wird von einer Transportvorrichtung 2 auf einem Transportband 4.1 der Walzenanordnung 5 zugeführt. Das Transportband 4.1 läuft über eine Mehrzahl von Führungsrollen 6.1, 6.2, 6.3 in Richtung des Pfeiles 7. In der Walzenanordnung 5 wird die Dicke des Teigbandes auf ein gewünschtes Mass reduziert und der gewalzte Bandabschnitt 1.2 wird von einer Wegführvorrichtung 3 auf einem Transportband 4.2 von der Walzenanordnung 5 weggeführt. Das Transportband 4.2 läuft über eine Mehrzahl von Führungsrollen 6.4, 6.5 in Richtung des Pfeiles 8.

Die Walzenanordnung 5 umfasst einen Rollenkorb 9 sowie eine Gegenwalze 10. Der Rollenkorb 9 seinerseits umfasst acht Satellitenrollen 11.1, 11.2, 11.3, 11.4, 11.5, 11.6, 11.7, 11.8, deren Symmetrieachsen sich jeweils in einer Ecke eines Achteckes 9.2 befinden und die um ihre Symmetrieachse rotierbar in den Ecken des Achteckes 9.2 gelagert sind.

Hier ist jedoch anzumerken, dass die Anzahl der Satellitenrollen beliebig ist. Bei kreisförmiger Anordnung der Satellitenrollen sind diese beispielsweise in den Ecken eines entsprechenden regelmässigen Polygons angeordnet. Die Satellitenrollen können indes auch unregelmässig auf der Umlaufbahn verteilt sein.

Das Achteck 9.2 ist seinerseits um seine Rotationsachse 9.1 drehbar gelagert. Die Gegenwalze 10 ist drehbar um ihre Rotationsachse 10.1 gelagert. Bei einer Drehung des Rollenkorbes 9 um seine Rotationsachse 9.1 beschreiben die Oberflächen der Satellitenrollen 11.1 bis 11.8 eine Hüllkurve 12 in der Form eines Kreises. Diese Hülle führt in einem bestimmten Abstand 13.1 an der Gegenwalze 10 vorbei.

Zum Walzen des Teigbandes wird der Rollenkorb 9 von einem nicht dargestellten Antrieb gemäss dem Pfeil 9.3 in eine Drehung im Uhrzeigersinn versetzt. Die Gegenwalze dreht entsprechend dem Pfeil 10.2 gegen den Uhrzeigersinn. Die Satellitenrollen 11.1 - 11.8 drehen ebenfalls gegen den Uhrzeigersinn und reduzieren die Dicke des Teigbandes entlang dem dick eingezeichneten Teigeingriffsbereich 14.1 auf den eingestellten Abstand 13.1.

Die gesamte Teigwalz-Maschine ist beispielsweise auf einer bestimmten Arbeitshöhe fest oder auf Rollen montiert oder besteht aus mehreren Einzelteilen, welche bei Bedarf aneinandergeschoben werden können. Die dargestellte Wegführvorrichtung 3 könnte beispielsweise durch eine andere Wegführvorrichtung ersetzt werden, auf welcher gleich eine Weiterverarbeitung des Teigbandes erfolgt. Oder die Transportvorrichtung 2 wird durch eine andere Transportvorrichtung ersetzt, welche den ungewalzten Bandabschnitt 1.1 in einem anderen Winkel zur Walzenanordnung führt.

Weiter kann die Teigwalz-Maschine auch weitere Module, wie beispielsweise ein Modul zum Aufbringen des Teiges auf die Transportvorrichtung oder eines bzw. mehrere Module zum Bemehlen des Teigbandes an verschiedenen Stellen bzw. zum Bemehlen der Transportvorrichtung selber.

In Figur 2 ist dieselbe Teigwalz-Maschine wie in Fig. 1 dargestellt, wobei die Walzenanordnung 5 eine veränderte Lage gegenüber der Transportvorrichtung 2 aufweist. Der Rollenkorb 9 wurde gemäss dem Pfeil 15 um einen bestimmten Winkel 16 im Uhrzeigersinn um die Rotationsachse 10.1 der Gegenwalze 10 gedreht. Aus dem veränderten Winkel zwischen der durch die Rotationsachse 9.1 und die Rotationsachse 10.1 aufgespannten Ebene 17 und der Transportvorrichtung 2 resultiert, bei gleichbleibendem Abstand der Hüllkurve 12, d.h. bei gleichbleibender Dicke des gewalzten Bandabschnittes 1.2, ein wesentlich längerer Teigeingriffsbereich 14.2.

In Figur 3 ist wiederum dieselbe Teigwalz-Maschine wie in Fig. 1 dargestellt, wobei diesmal nicht der Winkel zwischen der durch die Rotationsachse 9.1 und die Rotationsachse 10.1 aufgespannten Ebene 17 und der Transportvorrichtung, sondern die Lage des Rollenkorbes 9 gegenüber der Gegenwalze verändert wurde. Im Gegensatz zu Fig. 2 wurde der Rollenkorb 9 diesmal nämlich nicht gedreht, sondern lediglich in, bezogen auf die Gegenwalze 10, radialer Richtung zur Rotationsachse 10.1 der Gegenwalze 10 hin bzw. von dieser weg verschoben. Dies ergibt einen vergrösserten Abstand 13.2 zwischen der Hüllkurve 12 und der Gegenwalze, was bei einem nur unwesentlich veränderten Teigeingriffsbereich 14.3 in einer grösseren Dicke des gewalzten Bandabschnittes 1.2 resultiert.

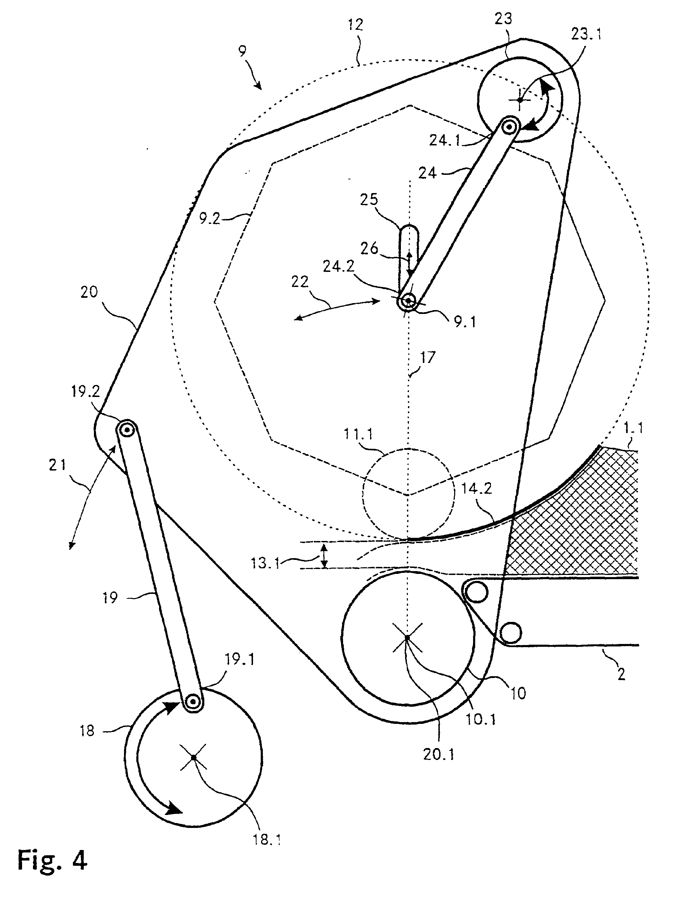

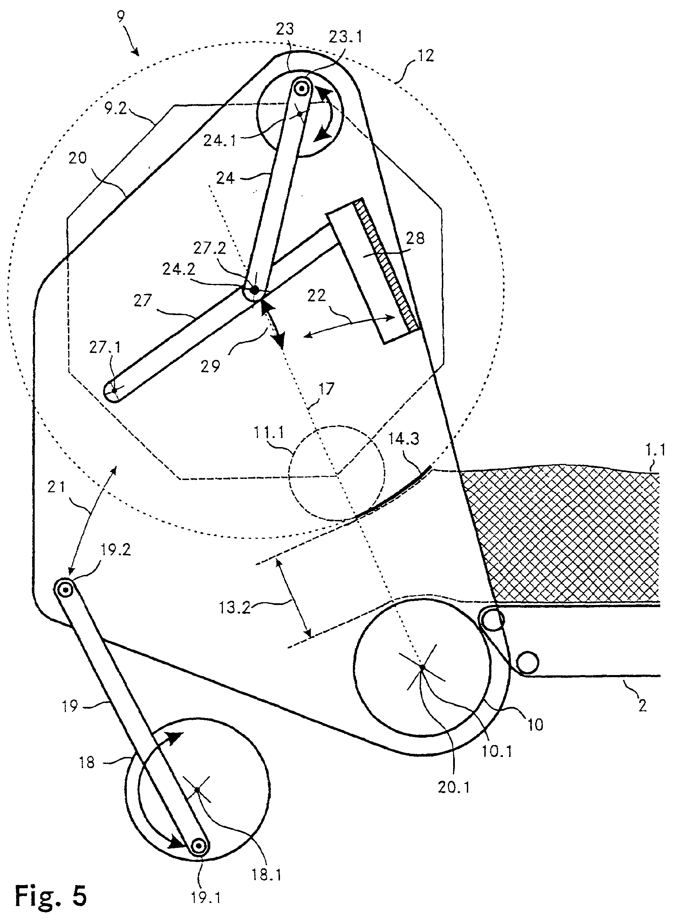

Die Figuren 4 und 5 zeigen eine mit Schwenkvorrichtungen realisierte Möglichkeit zur Ver änderung des Teigeingriffsbereiches und der Dicke des gewalzten Bandabschnittes mit jeweils unterschiedlichen Einstellungen. Dargestellt ist je die Transportvorrichtung 2, der ungewalzte Bandabschnitt 1.1, die Reduktion der Teigbanddicke entlang dem Teigeingriffsbereich 14.2, 14.3, die Gegenwalze 10 mit ihrer Rotationsachse 10.1 sowie das Achteck 9.2 mit einer Satellitenrolle 11.1 und die entsprechende Hüllkurve 12.

Eine Kurbelscheibe 18 ist drehbar um ihre Rotationsachse 18.1 räumlich fixiert im nicht dargestellten Gehäuse der Teigwalz-Maschine gelagert. Auch die Gegenwalze ist drehbar um ihre Rotationsachse 10.1 im Gehäuse der Teigwalz-Maschine gelagert. An der Kurbelscheibe 18 ist eine Koppelstange 19 exzentrisch, um eine Drehachse 19.1 drehbar gelagert. Am anderen Ende ist die Koppelstange 19, wiederum drehbar um eine Drehachse 19.2 an einer Grundplatte 20 fixiert. Die Grundplatte weist ihrerseits eine Drehachse 20.1 auf, welche mit der Rotationsachse 10.1 der Gegenwalze 10 zusammenfällt.

Durch Drehung der Kurbelscheibe 18 wird die Grundplatte 20 via Koppelstange 19 in Richtung des Pfeiles 21 in eine kreissektorförmige Rotation um die Drehachse 20.1 bzw. die Rotationsachse 10.1 der Gegenwalze 10 versetzt. Damit beschreibt auch die Rotationsachse 9.1 des Rollenkorbes 9 und damit das Achteck 9.2 mit der Satellitenrolle 11.1 eine kreissektorförmige Rotation in Richtung des Pfeiles 22 um die Drehachse 20.1. Entsprechend variiert der Teigeingriffsbereich 14.2, 14.3 zwischen einem minimalen und einem maximalen Wert. Die resultierende Dicke des Teigbandes, d.h. der Abstand der Hüllkurve 12 zur Gegenwalze 10 bleibt hingegen unverändert.

Die Dicke des Teigbandes wird über eine weitere Schwenkvorrichtung eingestellt. Hierzu ist eine zweite Kurbelscheibe 23 vorgesehen, welche um ihre Rotationsachse 23.1 drehbar auf der Grundplatte 20 gelagert ist. An der Kurbelscheibe 23 ist eine weitere Koppelstange 24 exzentrisch, um eine Drehachse 24.1 drehbar gelagert. Am anderen Ende ist die Koppelstange 24, wiederum drehbar um eine Drehachse 24.2 auf der Rotationsachse 9.1 des Rollenkorbes fixiert. D.h. die Drehachse 24.2 der Koppelstange 24 fällt mit der Rotationsachse 9.1 des Rollenkorbes zusammen.

Die Rotationsachse 9.1 des Rollenkorbes steckt in einem Führungsschlitz 25 auf der Grundplatte 20. Durch eine Drehung der Kurbelscheibe 23 wird die Rotationsachse 9.1 und damit der gesamte Rollenkorb 9 via Koppelstange 24 in eine dem Pfeil 26 entsprechende Auf- und Abbewegung im Führungsschlitz 25 versetzt. Entsprechend variiert der Abstand 13.1, 13.2 der Hüllkurve 12 von der Gegenwalze 10 zwischen einem minimalen und einem maximalen Wert, wobei der Teigeingriffsbereich nur unwesentlich verändert wird.

Figur 5 zeigt gegenüber Figur 4 eine leicht abgeänderte Führung der Rotationsachse 9.1 des Rollenkorbes 9. Diese erfolgt nicht wie bei Figur 4 über einen Führungsschlitz 25, sondern über einen Führungshebel 27, dessen eines Ende drehbar um eine Drehachse 27.1 auf der Grundplatte 20 gelagert ist. Die Rotationsachse 9.1 des Rollenkorbes ist nun drehbar, zusammen mit der Drehachse 24.2 der Koppelstange 24 im Punkt 27.2 auf dem Führungshebel 27 gelagert. Das andere Ende des Führungshebels 27 wird in einer ebenfalls auf der Grundplatte 20 vorgesehenen Führungsnut 28 geführt. In diesem Fall beschreibt die Rotationsachse 9.1 des Rollenkorbes nicht eine radiale Pendelbewegung in Richtung der Rotationsachse 10.1 der Gegenwalze 10, sondern eine kreissektorförmige Pendelbewegung gemäss dem Pfeil 29 um die Drehachse 27.1 des Führungshebels 27. Bei entsprechend gross gewähltem Abstand zwischen der Drehachse 27.1 und dem Punkt 27.2 entspricht dies annähernd einer radialen Bewegung der Rotationsachse 9.1 bezüglich der Gegenwalze 10.

Es gibt viele verschiedene Wege, um eine unabhängige Verstellung von Teigeingriffsbereich und Teigdicke zu erreichen. Neben bereits erwähnten Mitteln wie einem Kreuzschlitten könnte die Rotationsachse 9.1 des Rollenkorbes auch beidseitig der Satellitenrollen 11.1 bis 11.8 über ein erstes Gestänge mit der Rotationsachse 10.1 der Gegenwalze verbunden werden. Dieses könnte zur Einstellung der Teigdicke beispielsweise teleskopartig, auf beiden Seiten synchron in der Länge verstellbar und um die Rotationsachse 10.1 schwenkbar ausgebildet sein. Zur Veränderung des Teigeingriffsbereiches könnte die Rotationsachse 9.1 des Rollenkorbes über ein entsprechend ausgebildetes, längenverstellbares zweites Gestänge mit einem ortsfesten Teil der Walzvorrichtung verbunden sein, wobei das Gestänge auch hier um die Verbindungspunkte verschwenkbar ist. Durch Veränderung der Länge des zweiten Gestänges könnte der Teigeingriffsbereich unter Beibehaltung der Teigdicke eingestellt werden.

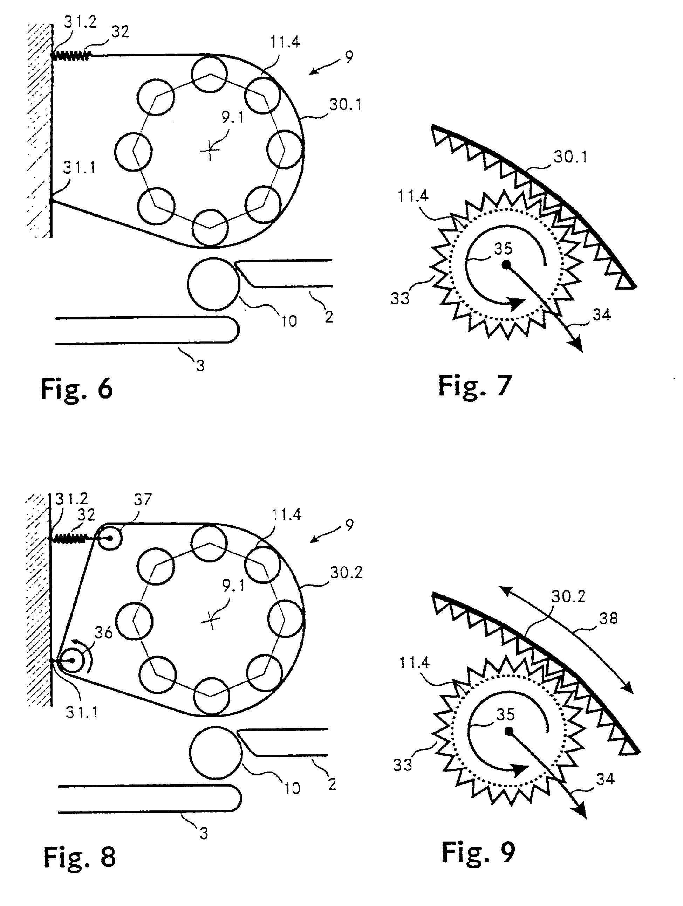

Figur 6 zeigt beispielhaft eine Möglichkeit, wie die Satellitenrollen 11.1 - 11.8 von einem ortsfesten Zahnriemen 30.1 angetrieben in eine Eigenrotation einer bestimmten Winkelgeschwindigkeit versetzt werden. Der Zahnriemen 30.1 ist an einem Punkt 31.1 fest mit der Teigwalz-Maschine verbunden. Von dort verläuft der Zahnriemen 30.1 in Richtung des Rollenkorbes 9, um eine bestimmte Anzahl der Satellitenrollen 11.1 - 11.8 herum und wird am anderen Ende über eine Feder 32 an einem Punkt 31.2 wieder mit der Teigwalz-Maschine verbunden. Die Feder 32 dient dazu, die unterschiedlichen Distanzen zwischen dem verfahrbaren Rollenkorb 9 und den Fixierungspunkten 31.1, 31.2 auszugleichen.

In Figur 7 ist eine Detailansicht der Satellitenrolle 11.4 und des entsprechenden Ausschnitts aus dem Zahnriemen 30.1 dargestellt und zeigt, wie die Satellitenrolle 11.4 bei einer Kreisbewegung in Richtung des Pfeiles 34 vom Zahnriemen 30.1 über ein Ritzel 33 in eine Eigenrotation gemäss dem Pfeil 35 versetzt wird. Die Winkelgeschwindigkeit kann durch die Grösse, d.h. die Anzahl Zähne bzw. den Radius des Ritzels 33 variiert werden.

In Figur 8 ist die Variante mit einem von einem Antriebsrad 36 angetriebenen Zahnriemen 30.2 dargestellt. Der Zahnriemen 30.2 ist nicht selber mit der Teigwalz-Maschine verbunden, sondern ist in sich geschlossen und läuft von dem Antriebsrad 36 über den Rollenkorb 9 zu einem Freilaufrad 37 und wieder zum Antriebsrad 36. Zum Ausgleich der Rollenkorbbewegung ist das Freilaufrad 37 wiederum über eine Feder 32 mit der Teigwalz-Maschine verbunden.

In Figur 9 ist, als einziger Unterschied zur Figur 7 mit dem ortsfesten Zahnriemen 30.1, entsprechend der Figur 8 der Zahnriemen 30.2 selber angetrieben, erfährt also eine bestimmte Geschwindigkeit in die eine oder die andere Richtung gemäss dem Doppelpfeil 38. Auf diese Weise kann die Winkelgeschwindigkeit der Satellitenrolle 11.4 bei gleichbleibendem Ritzel 33 innerhalb einer grossen Spannweite variiert werden.

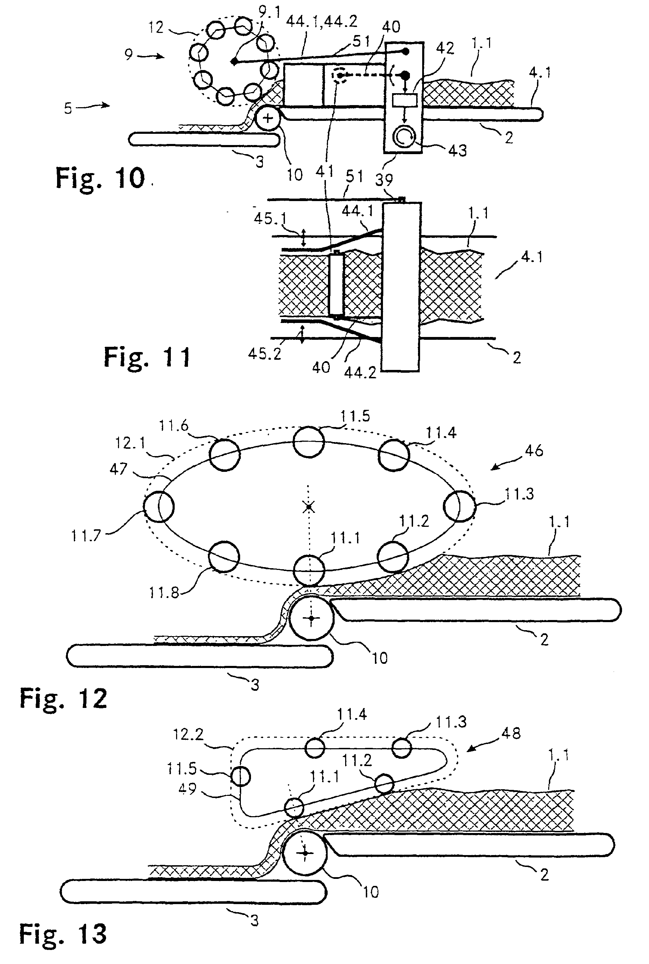

Die Figuren 10 und 11 zeigen eine Teigwalz-Maschine mit einer seitlichen Führung für das Teigband sowie einer Vorrichtung zur Steuerung der Transportgeschwindigkeit in Abhängigkeit der Dicke des ungewalzten Bandabschnittes 1.1. Figur 10 zeigt die Teigwalz-Maschine von der Seite, Figur 11 von oben.

Aus einem seitlichen Aufbau 39 wird an einem Hebel 40 eine sogenannte Tänzerwalze 41 über den ungewalzten Bandabschnitt 1.1 des Teigbandes geführt. Aus der jeweiligen Position der Tänzerwalze 41 wird die zugehörige Dicke des Teigbandes ermittelt und die Vorschubgeschwindigkeit in Abhängigkeit dieser Dicke gesteuert, indem eine Steuerungseinheit 42 die Geschwindigkeit einer entsprechenden Antriebsrolle 43 und damit die Geschwindigkeit des Transportbandes 4.1 variiert. Die Steuerung der Geschwindigkeit erfolgt jedoch zeitlich verzögert, damit die Geschwindigkeit des Transportbandes 4.1 genau in dem Moment etwas erhöht bzw. vermindert wird, wenn sich eine durch die Tänzerwalze festgestellte dickere respektive dünnere Stelle des Teigbandes genau vor bzw. in der Walzenanordnung 5 befindet.

Aus demselben seitlichen Aufbau 39 ragt auf jeder Seite des ungewalzten Bandabschnittes 1.1 des Teigbandes je eine abgewinkelte, seitliche Führungsschiene 44.1, 44.2 heraus und wird durch eine horizontale Wischbewegung entsprechend den Pfeilen 45.1 und 45.2 knapp über das Transportband 4.1 geführt. Durch diese Wischbewegung werden Unregelmässigkeiten in der Breite des Teigbandes ausgeglichen und das Teigband wird mit einer mehr oder weniger konstanten Breite zur Walzenanordnung 5 geführt.

Eine Verbindungsstange 51 verbindet den Rollenkorb 9 mit dem seitlichen Aufbau 39, wobei die Verbindungsstange jeweils drehbar im seitlichen Aufbau 39 bzw. drehbar um eine Rotationsachse 9.1 des Rollenkorbs gelagert ist. Wird nun die Lage des Rollenkorbs 9 gegenüber der Transportvorrichtung 2 verändert, indem er verschwenkt wird, wird der seitliche Aufbau 39 mitgezogen bzw. mitgestossen und der Abstand der Tänzerwalze 41 bzw. der seitlichen Führungsschienen 44.1, 44.2 zum Rollenkorb 9 bleibt praktisch unverändert. Der seitliche Aufbau 39 ist zu diesem Zweck beispielsweise auf (nicht dargestellten) Rollen oder Schienen montiert.

In den beiden Figuren 12 und 13 sind weitere mögliche Rollenanordnungen dargestellt. Figur 12 zeigt eine Rollenanordnung 46, bei welcher die Symmetrieachsen der Satellitenrollen 11.1 - 11.8 beispielsweise auf einem elliptisch umlaufenden Band 47 befestigt sind und die Satellitenrollen 11.1 - 11.8 entsprechend auf einer elliptischen Umlaufbahn an der Gegenwalze 10 vorbeigeführt werden. Die Hüllkurve 12.1 ist entsprechend ebenfalls elliptisch ausgebildet.

Eine Rollenanordnung 48 mit einer dreieckförmigen Umlaufbahn der Satellitenrollen 11.1 - 11.5 ist in Fig. 13 dargestellt. Die Satellitenrollen 11.1 - 11.5 werden wiederum an einem entsprechend geführten Band 49 auf ihrer Umlaufbahn gehalten. Die Hüllkurve 12.2 ist entsprechend ebenfalls dreieckförmig mit abgerundeten Ecken ausgebildet.

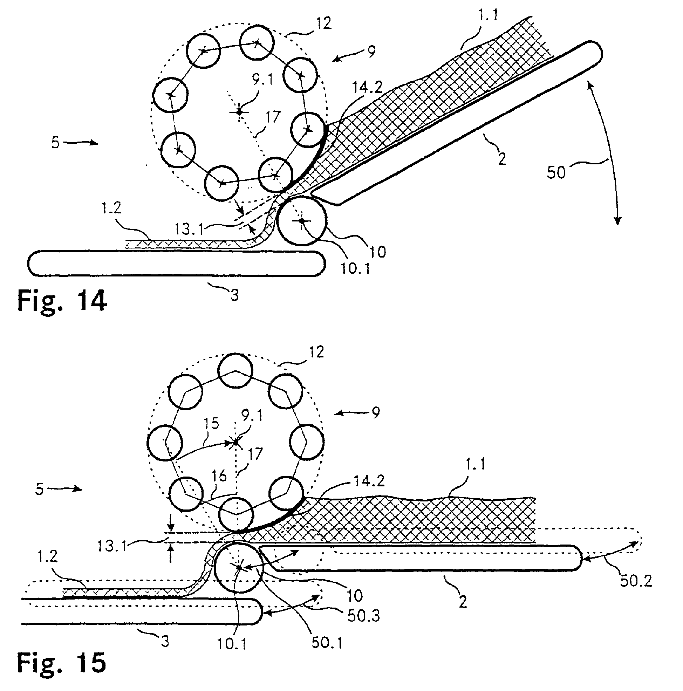

Figur 14 zeigt die Veränderung des Teigeingriffsbereiches 14.2 durch Veränderung der Position der Transportvorrichtung 2 im Gegensatz zu den Figuren 2 und 3, wo jeweils die Position des Rollenkorbes 9 verändert wurde. Unter Beibehaltung der räumlichen Lage des Rollenkorbes 9 und der Gegenwalze 10 wird die Lage der Transportvorrichtung 2 derart verändert, dass der ungewalzte Bandabschnitt 1.1 des Teigbandes unter einem veränderten Winkel zur Walzenanordnung 5 geführt wird. D. h. die Transportvorrichtung 2 wird um die Rotationsachse 10.1 der Gegenwalze 10 gemäss dem Pfeil 50 verschwenkt. Der Teigeingriffsbereich 14.2 und der Abstand des Rollenkorbes 9 zur Gegenwalze 10 entsprechen den Werten in Figur 2.

In Figur 15 ist eine andere Möglichkeit zur Lageänderung von Walzenanordnung 5 und Transportvorrichtung 2 bei ortsfestem Rollenkorb 9 dargestellt. Anstatt wie in Figur 2 den Rollenkorb 9 um die Rotationsachse 10.1 der Gegenwalze zu verschwenken, wird die Gegenwalze 10 um die Rotationsachse 9.1 des Rollenkorbes 9 in Richtung des Pfeiles 50.1 verschwenkt. Die Transportvorrichtung 2 wie auch die Wegführvorrichtung 3 werden unter Beibehaltung ihrer räumlichen Winkellage entsprechend den Pfeilen 50.2, 50.3 mitbewegt, d. h. sie folgen der translatorischen Verschiebung der Rotationsachse 10.1 der Gegenwalze 10. Die ursprüngliche Position der Transportvorrichtung 2, der Gegenwalze 10 und der Wegführvorrichtung 3 ist jeweils gestrichelt eingezeichnet.

Allgemein lässt sich sagen, dass sich sowohl die Anzahl, als auch die Umlaufbahn der Satellitenrollen und damit die von den Satellitenrollen beschriebene Hüllkurve frei wählen lässt. Ebenso sind die Durchmesser der verwendeten Rollen und Walzen beliebig wählbar. D.h. die Charakteristik, wie sich der Teigeingriffsbereich in Abhängigkeit des Drehwinkels ändern soll, lässt sich beliebig definieren. Es ist jedoch vorteilhaft, darauf zu achten, dass die Vorrichtung zum Einstellen des Teigeingriffsbereiches derart positioniert und ausgebildet ist, dass sich der minimale Abstand von der Hüllkurve zur Gegenwalze beim Variieren des Teigeingriffsbereiches nicht ändert, d.h. dass die Rollenanordnung zum Variieren des Teigeingriffsbereiches um die Rotationsachse der Gegenwalze bzw. umgekehrt gedreht wird.

Zusammenfassend ist festzustellen, dass es die Erfindung erlaubt, mit einer einzigen Vorrichtung verschiedenste Arten von Teig zu Verarbeiten, d.h. die Teigeingriffststrecke, entlang welcher der Teig auf die vorgegebene Dicke reduziert wird, entsprechend den Eigenschaften des zu verarbeitenden Teiges einzustellen, ohne dabei gleichzeitig die Dicke des resultierenden Teigbandes zu verändern.

## Patentansprüche

1. Vorrichtung zum Walzen eines Teigbandes (1.1, 1.2), umfassend
a) eine Transportvorrichtung (2) zum Zuführen des Teigbandes (1.1, 1.2),
b) eine Walzenanordnung (5) zum Reduzieren einer Dicke des Teigbandes (1.1, 1.2), und
c) Mittel zum Variieren einer gegenseitigen Lage der Walzenanordnung (5) und der Transportvorrichtung (2) in zumindest zwei verschiedenen Raumrichtungen,
**dadurch gekennzeichnet, dass**
d) die genannten Mittel zum Variieren einer gegenseitigen Lage Mittel zum Schwenken der gegenseitigen Lage der Walzenanordnung und der Transportvorrichtung bei gleich bleibender Dicke des Teigbandes (1.1, 1.2) umfassen, um den Teigeingriffsbereich (14.1, 14.2, 14.3) entsprechend den Eigenschaften des Teigbandes unabhängig von der Dicke des Teigbandes einstellen zu können.

2. Vorrichtung nach Anspruch 1, **dadurch gekennzeichnet, dass** die Walzenanordnung (5) eine Rollenanordnung (9) und zum Reduzieren der Dicke des Teigbandes (1.1, 1.2) in einem Teigeingriffsbereich (14.1, 14.2, 14.3) auf einer der Rollenanordnung (9) gegenüberliegenden Seite des Teigbandes (1.1, 1.2) genau eine Gegenwalze (10) umfasst.

3. Vorrichtung nach Anspruch 2, **dadurch gekennzeichnet, dass** das Teigband (1.1, 1.2) der Walzenanordnung (5) von der Transportvorrichtung (2) entlang einer Transportbahn zugeführt werden kann, die Rollenanordnung (9) zumindest eine Satellitenrolle (11.1, 11.2, 11.3, 11.4, 11.5, 11.6, 11.7, 11.8) aufweist, welche auf einer Umlaufbahn in einem vorgegebenen Abstand an der Gegenwalze (10) vorbeigeführt werden kann und der Teigeingriffsbereich (14.1, 14.2, 14.3) unter Beibehaltung des vorgegebenen Abstandes durch Variieren eines Winkels zwischen der Transportbahn und einer durch eine Rotationsachse (10.1) der Gegenwalze (10) und eine Rotationsachse (9.1) der Satellitenrolle (11.1, 11.2, 11.3, 11.4, 11.5, 11.6, 11.7, 11.8) aufgespannten Ebene eingestellt werden kann.

4. Vorrichtung nach Anspruch 3, **dadurch gekennzeichnet, dass** die Dicke des Teigbandes (1.1, 1.2) durch Variieren des Abstandes von der Umlaufbahn zur Gegenwalze (10) eingestellt werden kann.

5. Vorrichtung nach Anspruch 4, **dadurch gekennzeichnet, dass** die Dicke des Teigbandes (1.1, 1.2) mit einer Schwenkvorrichtung eingestellt werden kann.

6. Vorrichtung nach Anspruch 5, **dadurch gekennzeichnet, dass** die Schwenkvorrichtung mit den Mitteln zum Schwenken der gegenseitigen Lage der Walzenanordnung gekoppelt ist.

7. Vorrichtung nach Anspruch 3 und einem der Ansprüche 4 bis 6, **dadurch gekennzeichnet, dass** die zumindest eine Satellitenrolle (11.1, 11.2, 11.3, 11.4, 11.5, 11.6, 11.7, 11.8) eine Symmetrieachse aufweist und um diese Symmetrieachse drehbar in der Rollenanordnung (9) fixiert ist.

8. Vorrichtung nach Anspruch 7, **dadurch gekennzeichnet, dass** die Satellitenrolle (11.1, 11.2, 11.3, 11.4, 11.5, 11.6, 11.7, 11.8) ein Ritzel (33) aufweist und von einem in das Ritzel (33) eingreifenden Zahnriemen (30.1, 30.2) angetrieben ist, wobei der Zahnriemen (30.1, 30.2) fixiert oder selber angetrieben ist.

9. Vorrichtung nach Anspruch 3 und einem der Ansprüche 4 bis 8, **dadurch gekennzeichnet, dass** sie
- einen Speicher zur Speicherung einer Mehrzahl von Datensätzen, wobei ein Datensatz zumindest eine zu verarbeitende Teigart sowie Parameter umfasst, mit welchen die gegenseitige Lage der Walzenanordnung (5) und der Transportvorrichtung (2) sowie der Abstand zwischen der Umlaufbahn der zumindest einen Satellitenrolle (11.1, 11.2, 11.3, 11.4, 11.5, 11.6, 11.7, 11.8) und der Gegenwalze (10) bestimmt werden kann,
- Mittel zur Auswahl der zu verarbeitenden Teigart,
- Mittel zum Auslesen des Datensatzes für die ausgewählte Teigart aus dem Speicher sowie
- Mittel zur Bestimmung und automatischen Einstellung der zur ausgewählten Teigart zugehörigen gegenseitigen Lage der Walzenanordnung (5) und der Transportvorrichtung (2) sowie des zugehörigen Abstandes zwischen der Umlaufbahn der zumindest einen Satellitenrolle (11.1, 11.2, 11.3, 11.4, 11.5, 11.6, 11.7, 11.8) und der Gegenwalze (10).
aufweist.

10. Vorrichtung nach einem der Ansprüche 1 bis 9, **dadurch gekennzeichnet, dass** die Transportvorrichtung (2) Mittel zum Einstellen einer Breite sowie Mittel zur seitlichen Führung des Teigbandes (1.1, 1.2) umfasst.

11. Vorrichtung nach einem der Ansprüche 1 bis 10, **dadurch gekennzeichnet, dass** die Transportvorrichtung (2) Mittel zum Bestimmen der Dicke des Teigbandes (1.1, 1.2) sowie Mittel zum Variieren einer Transportgeschwindigkeit des Teigbandes (1.1, 1.2) in Abhängigkeit der Dicke des Teigbandes (1.1, 1.2) umfasst.

12. Verfahren geeignet für den Betrieb einer Vorrichtung nach Anspruch 1 zum Walzen eines Teigbandes (1.1, 1.2), wobei ein Teigband (1.1, 1.2) von einer Transportvorrichtung (2) einer Walzenanordnung (5) zugeführt und von der Walzenanordnung (5) eine Dicke des Teigbandes (1.1, 1.2) reduziert wird, **dadurch gekennzeichnet, dass** vor oder während dem Reduzieren der Dicke des Teigbandes eine gegenseitige Lage der Walzenanordnung und der Transportvorrichtung in zumindest zwei verschiedenen Raumrichtungen derart variiert wird, dass bei gleich bleibender Dicke des Teigbandes (1.1, 1.2) der Teigeingriffsbereich (14.1, 14.2, 14.3) entsprechend den Eigenschaften des Teigbandes eingestellt wird.

13. Verfahren nach Anspruch 12, **dadurch gekennzeichnet, dass** die Dicke des Teigbandes (1.1, 1.2) zwischen einer Rollenanordnung (9) und genau einer Gegenwalze (10) der Walzenanordnung (5) in einem Teigeingriffsbereich (14.1, 14.2, 14.3) reduziert wird und die gegenseitige Lage der Walzenanordnung (5) und der Transportvorrichtung (2) manuell oder automatisch derart variiert wird, dass bei gleich bleibender Dicke des Teigbandes (1.1, 1.2) ein zumindest einer Eigenschaft des Teigbandes (1.1, 1.2) entsprechender Teigeingriffsbereich (14.1, 14.2, 14.3) eingestellt wird.

## Claims

1. Device for rolling a dough strip (1.1, 1.2), comprising
a) a transport device (2) for supplying the dough strip (1.1, 1.2),
b) a roller arrangement (5) for reducing a thickness of the dough strip (1.1, 1.2), and
c) means for varying a mutual position of the roller arrangement (5) and of the transport device (2) in at least two different spatial directions,
**characterized in that**
d) said means for varying a mutual position include means for pivoting a mutual position of the roller arrangement and of the transport device with a thickness of the dough strip (1.1, 1.2) being uniform, the dough action region (14.1, 14.2, 14.3) can be set according to the properties of the dough strip independently of the thickness of the dough strip.

2. Device according to Claim 1, **characterized in that** the roller arrangement (5) comprises a roll arrangement (9) and, to reduce the thickness of the dough strip (1.1, 1.2) in a dough action region (14.1, 14.2, 14.3) on a side of the dough strip (1.1, 1.2) which is located opposite the roll arrangement (9), exactly one counterroller (10) .

3. Device according to Claim 2, **characterized in that** the dough strip (1.1, 1.2) can be supplied to the roller arrangement (5) by the transport device (2) along a transport path, the roll arrangement (9) has at least one satellite roll (11.1, 11.2, 11.3, 11.4, 11.5, 11.6, 11.7, 11.8) which can be guided on a rotational path past the counterroller (10) at a predetermined distance from the latter, and, with the predetermined distance being maintained, the dough action region (14.1, 14.2, 14.3) can be set by the variation of an angle between the transport path and a plane spanned by an axis of rotation (10.1) of the counterroller (10) and an axis of rotation (9.1) of the satellite roll (11.1, 11.2, 11.3, 11.4, 11.5, 11.6, 11.7, 11.8).

4. Device according to Claim 3, **characterized in that** the thickness of the dough strip (1.1, 1.2) can be set by a variation of the distance from the rotational path to the counterroller (10).

5. Device according to Claim 4, **characterized in that** the thickness of the dough strip (1.1, 1.2) can be set by means of a pivoting device.

6. Device according to Claim 5, **characterized in that** the pivoting device is coupled to the means for pivoting a mutual position of the roller arrangement.

7. Device according to Claim 3 and one of Claims 4 to 6, **characterized in that** the at least one satellite roll (11.1, 11.2, 11.3, 11.4, 11.5, 11.6, 11.7, 11.8) has an axis of symmetry and is fixed in the roll arrangement (9) so as to be rotatable about this axis of symmetry.

8. Device according to Claim 7, **characterized in that** the satellite roll (11.1, 11.2, 11.3, 11.4, 11.5, 11.6, 11.7, 11.8) has a pinion (33) and is driven by a toothed belt (30.1, 30.2) engaging into the pinion (33), the toothed belt (30.1, 30.2) being fixed or itself being driven.

9. Device according to Claim 3 and one of Claims 4 to 8, **characterized in that** it has
- a memory for storing a plurality of data records, a data record comprising at least one type of dough to be processed and parameters by means of which the mutual position of the roller arrangement (5) and of the transport device (2) and the distance between the rotational path of the at least one satellite roll (11.1, 11.2, 11.3, 11.4, 11.5, 11.6, 11.7, 11.8) and the counterroller (10) can be determined,
- means for selecting the type of dough to be processed,
- means for reading out the data record of the selected type of dough from the memory and
- means for the determination and automatic setting of the mutual position, associated with the selected type of dough, of the roller arrangement (5) and of the transport device (2) and of the associated distance between the rotational path of the at least one satellite roll (11.1, 11.2, 11.3, 11.4, 11.5, 11.6, 11.7, 11.8) and the counterroller (10).

10. Device according to one of Claims 1 to 9, **characterized in that** the transport device (2) comprises means for setting a width and means for the lateral guidance of the dough strip (1.1, 1.2).

11. Device according to one of Claims 1 to 10, **characterized in that** the transport device (2) comprises means for determining the thickness of the dough strip (1.1, 1.2) and means for varying a transport speed of the dough strip (1.1, 1.2) as a function of the thickness of the dough strip (1.1, 1.2).

12. Method adapted for operating a device according to Claim 1 for rolling a dough strip (1.1, 1.2), a dough strip (1.1, 1.2) being supplied to a roller arrangement (5) by a transport device (2) and a thickness of the dough strip (1.1, 1.2) being reduced by the roller arrangement (5), characterrized in that, before or during the reduction in the thickness of the dough strip (1.1, 1.2), a mutual position of the roller arrangement and of the transport device is varied in at least two different spatial directions in such a way that the dough action region (14.1, 14.2, 14.3) can be set according to the properties of the dough strip with a thickness of the dough strip (1.1, 1.2) being uniform.

13. Method according to Claim 12, **characterized in that** the thickness of the dough strip (1.1, 1.2) is reduced in a dough action region (14.1, 14.2, 14.3) between a roll arrangement (9) and exactly one counterroller (10) of the roller arrangement (5), and the mutual position of the roller arrangement (5) and of the transport device (2) is varied manually or automatically in such a way that, with the thickness of the dough strip (1.1, 1.2) remaining the same, a dough action region (14.1, 14.2, 14.3) corresponding to at least one property of the dough strip (1.1, 1.2) is set.

## Revendications

1. Un dispositif pour rouler une bande de pâte (1.1, 1.2), comprenant
a) un dispositif de transport (2) pour l'amenée de la bande de pâte (1.1, 1.2),
b) un agencement de rouleaux (5) pour réduire une épaisseur de la bande de pâte (1.1, 1.2), et
c) des moyens pour modifier une position réciproque de l'agencement de rouleaux (5) et du dispositif de transport (2) dans au moins deux directions différentes dans l'espace,
**caractérisé en ce que**,
d) les moyens cités pour modifier une position réciproque comprennent des moyens pour le basculement de la position réciproque de l'agencement de rouleaux et du dispositif de transport avec une épaisseur uniforme de la bande de pâte (1.1, 1.2), afin de pouvoir régler la zone d'engagement de pâte (14.1, 14.2, 14.3) en fonction des propriétés de la bande de pâte indépendamment de l'épaisseur de la bande de pâte.

2. Dispositif selon la revendication 1, **caractérisé en ce que** l'agencement de rouleaux (5) comprend un agencement de galets (9) et précisément un contre-rouleau (10) pour réduire l'épaisseur de la bande de pâte (1.1, 1.2) dans une zone d'engagement de pâte (14.1, 14.2, 14.3) sur un côté, opposé à l'agencement de galets (9), de la bande de pâte (1.1, 1.2).

3. Dispositif selon la revendication 2, **caractérisé en ce que** la bande de pâte (1.1, 1.2) peut être amenée par le dispositif de transport (2) depuis l'agencement de rouleaux (5) le long d'une glissière de transport, l'agencement de galets (9) présentant au moins un galet satellite (11.1, 11.2, 11.3, 11.4, 11.5, 11.6, 11.7, 11.8), qui peut être guidé sur une glissière de passage à une distance prédéfinie devant le contre-rouleau (10) et la zone d'engagement de pâte (14.1, 14.2, 14.3) peut être réglée en conservant la distance prédéfinie par la modification d'un angle entre la glissière de transport et un plan tendu par un axe de rotation (10.1) du contre-rouleau (10) et un axe de rotation (9.1) du galet satellite (11.1, 11.2, 11.3, 11.4, 11.5, 11.6, 11.7, 11.8).

4. Dispositif selon la revendication 3, **caractérisé en ce que** l'épaisseur de la bande de pâte (1.1, 1.2) peut être réglée en modifiant la distance de la glissière de passage au contre-rouleau (10).

5. Dispositif selon la revendication 4, **caractérisé en ce que** l'épaisseur de la bande de pâte (1.1, 1.2) peut être réglée avec un dispositif de basculement.

6. Dispositif selon la revendication 5, **caractérisé en ce que** le dispositif de basculement est couplé avec les moyens pour le basculement de la position réciproque de l'agencement de rouleaux.

7. Dispositif selon la revendication 3 et l'une quelconque des revendications 4 à 6, **caractérisé en ce que** le au moins un galet satellite (11.1, 11.2, 11.3, 11.4, 11.5, 11.6, 11.7, 11.8) présente un axe de symétrie et est fixé dans l'agencement de galets (9) de façon à pouvoir tourner autour de cet axe de symétrie.

8. Dispositif selon la revendication 7, **caractérisé en ce que** le galet satellite (11.1, 11.2, 11.3, 11.4, 11.5, 11.6, 11.7, 11.8) présente un pignon (33) et est entraîné par une courroie crantée (30.1, 30.2) s'engageant dans le pignon (33), la courroie crantée (30.1, 30.2) étant fixée ou elle-même entraînée.

9. Dispositif selon la revendication 3 et l'une quelconque des revendications 4 à 8, **caractérisé en ce qu'**il présente
- une mémoire pour le stockage d'une pluralité d'ensembles de données, un ensemble de données comprenant au moins un type de pâte à traiter et des paramètres, avec lesquels la position réciproque de l'agencement de rouleaux (5) et du dispositif de transport (2) ainsi que la distance entre la glissière de passage du au moins un galet satellite (11.1, 11.2, 11.3, 11.4, 11.5, 11.6, 11.7, 11.8) et le contre-rouleau (10) peut être déterminée,
- des moyens pour le choix du type de pâte à traiter,
- des moyens pour l'extraction de la mémoire de l'ensemble de données pour le type de pâte choisi,
- des moyens pour la détermination et le réglage automatique de la position réciproque, spécifique au type de pâte choisi, de l'agencement de rouleaux (5), et du dispositif de transport (2) ainsi que de la distance spécifique entre la glissière de passage du au moins un galet satellite (11.1, 11.2, 11.3, 11.4, 11.5, 11.6, 11.7, 11.8) et le contre-rouleau (10).

10. Dispositif selon l'une quelconque des revendications 1 à 9, **caractérisé en ce que** le dispositif de transport (2) comprend des moyens pour le réglage d'une largeur et des moyens pour le réglage latéral de la bande de pâte (1.1, 1.2).

11. Dispositif selon l'une quelconque des revendications 1 à 10, **caractérisé en ce que** le dispositif de transport (2) comprend des moyens pour déterminer l'épaisseur de la bande de pâte (1.1, 1.2) et des moyens pour modifier une vitesse de transport de la bande de pâte (1.1, 1.2) en fonction de l'épaisseur de la bande de pâte (1.1, 1.2).

12. Procédé approprié pour l'exploitation d'un dispositif selon la revendication 1 pour rouler une bande de pâte (1.1, 1.2), une bande de pâte (1.1, 1.2) étant amenée par un dispositif de transport (2) à un agencement de rouleaux (5) et une épaisseur de la bande de pâte (1.1, 1.2) étant réduite par l'agencement de rouleaux (5), **caractérisé en ce que**, avant ou pendant la réduction de l'épaisseur de la bande de pâte, une position réciproque de l'agencement de rouleaux et du dispositif de transport est modifiée dans au moins deux directions dans l'espace différentes, de telle sorte que, avec une épaisseur uniforme de la bande de pâte (1.1, 1.2), la zone d'engagement de pâte (14.1, 14.2, 14.3) est réglée en fonction des propriétés de la bande de pâte.

13. Procédé selon la revendication 12, **caractérisé en ce que** l'épaisseur de la bande de pâte (1.1, 1.2) est réduite entre un agencement de galets (9) et exactement un contre-rouleau (10) de l'agencement de rouleaux (5) dans une zone d'engagement de pâte (14.1, 14.2, 14.3) et la position réciproque de l'agencement de rouleaux (5) et du dispositif de transport (2) est modifiée réellement ou automatiquement de telle sorte que, avec une épaisseur uniforme de la bande de pâte (1.1, 1.2), une zone d'engagement de pâte (14.1, 14.2, 14.3) correspondant à au moins une propriété de la bande de pâte (1.1, 1.2) est réglée.
